# EUROPEAN PATENT APPLICATION

(11) **EP 4 765 738 A1**
(43) Date of publication of application: **24.06.2026**
(21) Application number: 25222162.7
(22) Date of filing: 10.12.2025
(51) Int. Cl.: H04L 9/40, H04W 4/80, H04W 8/20, H04W 12/04, H04W 12/06, H04W 12/30, H04W 12/43

(54) **METHOD FOR TRANSFERRING AN EMBEDDED SUBSCRIBER IDENTITY MODULE SUBSCRIBER PROFILE AND MOBILE DEVICES**

(30) Priority: 23.12.2024 CN 202411906863
(71) Applicant: NXP USA, Inc., Austin, TX 78735 (US)
(72) Inventor: Gu, Youcai, 5656AG Eindhoven (NL)
(74) Representative: Krott, Michel

(57) **Abstract**

There is disclosed a method for transferring an embedded subscriber identity module, eSIM, subscriber profile from a first mobile device to a second mobile device, which are within near field communication, NFC, range to each other using a profile server. The method comprises performing a transfer authentication of the first mobile device and the second mobile device using NFC technology. In response to the successful transfer authentication, profile identification information is transmitted from the first mobile device to the second mobile device using optical technology. Then the first mobile device generates an authentication key based on the subscriber profile and transmits it to the second mobile device. The second mobile device then downloads the subscriber profile from the profile server and the subscriber profile is deleted on the first mobile device. Further mobile devices and a computer program product are disclosed.

## Description

### TECHNICAL FIELD

The present disclosure relates to a method for transferring an embedded subscriber identity module, eSIM, subscriber profile from a first mobile device to a second mobile device by using near field communication, NFC, and a profile server. The disclosure further relates to a first and a second mobile device and a computer program product.

The disclosure may hence relate to the technical field of mobile communications, in particular with respect to embedded Subscriber Identity Module, SIM, or eSIM.

### TECHNICAL BACKGROUND

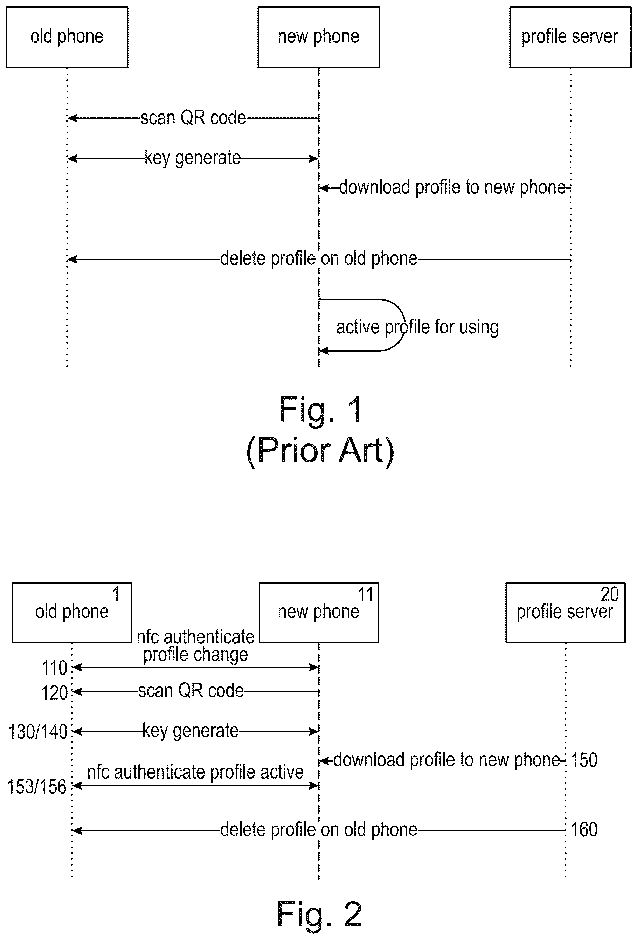

Subscriber information can be stored on an eSIM. If the subscriber wants to change the mobile phone, the subscriber information needs to be transferred from the old phone to the new phone. According to the prior art, as depicted in Figure 1, the usual process involves the new phone scanning a quick response, QR, code on the old phone, which then generates a key and transmits this to the new phone. The new phone can download a subscriber profile from a profile server with this key. The profile server then deletes the subscriber profile from the old phone, and the subscriber profile on the new phone is activated.

One problem that exists with the aforementioned process of the prior art is possible abuse by so-called online hacking or telecom fraud. It is possible that a subscriber can be attacked or cheated online the subscriber profile can be stolen from a distant location, such that local, i.e. national law enforcement, which is in charge of such crimes faces legal hindrances due to the attacker being outside of the local jurisdiction. This is possible since the QR code can be copied and transmitted or even remotely captured from the first mobile device with so-called spy software. Further, the currently employed techniques usually do not comprise any encryption, which makes them susceptible to online theft.

### SUMMARY OF THE DISCLOSURE

There may be a need to provide improved transfer of subscriber profiles between mobile devices. A method for transferring an embedded subscriber identity module, eSIM, subscriber profile from a first mobile device to a second mobile device by using near field communication, NFC, and a profile server. First and second mobile devices as well as a computer program product are also provided.

According to an aspect of the present disclosure, it is described a method for transferring an embedded subscriber identity module, eSIM, subscriber profile from a first mobile device to a second mobile device, which are within near field communication, NFC, range to each other using a profile server. The method comprises performing a transfer authentication of the first mobile device and the second mobile device using NFC technology. In response to the successful transfer authentication the method proceeds with transmitting profile identification information, from the first mobile device to the second mobile device, using optical technology. The first mobile device then generates an authentication key based on the subscriber profile and transmits it to the second mobile device. The second mobile device then downloads the subscriber profile from the profile server using the authentication key and the profile identification information, and the profile server deletes the subscriber profile on the first mobile device.

According to a further aspect of the present disclosure, it is described a first mobile device comprising at least a memory, an NFC unit, a display and a processor. The memory stores an embedded subscriber identity module, eSIM, subscriber profile. The processor is configured to perform a transfer authentication with a second mobile device using the NFC unit and, in response to the successful transfer authentication, to display profile identification information on the display. The first mobile device then generates an authentication key based on the subscriber profile and transmits it to the second mobile device. The processor also deletes the subscriber profile in response to receiving a deletion instruction from a profile server.

According to a further aspect of the present disclosure, it is described a second mobile device comprising at least a memory, an NFC unit, a camera and a processor. The memory may store an embedded subscriber identity module, eSIM, subscriber profile. The processor is configured to perform a transfer authentication with the first mobile device using the NFC unit, and in response to the successful transfer authentication, to capture profile identification information using the camera from a display of the first mobile device. The processor is further configured to receive an authentication key from the first mobile device and download the subscriber profile from a profile server using the authentication key and the profile identification information.

By using the NFC technology for the transfer authentication, it can be ensured that the two mobile devices are in the same location. NFC technology is based on contactless connection technologies. It operates at a frequency of 13.56 MHz and offers a standard at data rates ranging from 106 to 848 kbit/s. The range of NFC is often indicated with a few centimeters, where in practice NFC works reliably only in distances of up to 10cm, thereby long-distance attacks can be prevented.

Also, NFC may be encrypted, whereby the security can be significantly enhanced.

In summary, this disclosure may enable to improve the transfer of an embedded subscriber identity module, eSIM, subscriber profile from a first mobile device to a second mobile device by using NFC and a profile server.

The aspects defined above, and further aspects of the disclosure are apparent from the examples of embodiment to be described hereinafter and are explained with reference to these examples of embodiment. The disclosure will be described in more detail hereinafter with reference to examples of embodiment but to which the disclosure is not limited.

### EXEMPLARY EMBODIMENTS

According to an embodiment, the method may further comprise activating the subscriber profile on the second mobile device. Accordingly, the processor of the second mobile device may further be configured to activate the subscriber profile. Thereby the subscriber profile can be used on the second mobile device.

According to another embodiment, the method may further comprise performing an activation authentication of the first mobile device and the second mobile device using NFC technology and activating the subscriber profile on the second mobile device in response to the successful activation authentication. Accordingly, the processor of the first mobile device may further be configured to perform an activation authentication with the second mobile device using the NFC unit, and the processor of the second mobile device may further be configured to perform an activation authentication with the first mobile device using the NFC unit and activate the subscriber profile in response to the successful activation authentication. Thereby, additional security can be facilitated, since a fraud could not activate the subscriber profile, even if the subscriber profile was stolen.

According to an embodiment, the activation authentication and/or the transfer authentication may be encrypted. Accordingly, the processors of the first and second mobile devices may further be configured to perform the activation authentication using encryption. By using encryption, the security may further be increased.

According to an embodiment, a computer program product comprises instructions which, when the program is executed by a computer, cause the computer to carry out the method as described above.

### BRIEF DESCRIPTION OF THE DRAWINGS

Figure 1 illustrates a data flow according to prior art.
Figure 2 illustrates a data flow according to an exemplary embodiment of the disclosure.
Figure 3 shows a flow chart illustrating a method according to an exemplary embodiment of the disclosure.
Figure 4 shows schematic configurations of a first and a second mobile device according to an exemplary embodiment of the disclosure.
Figure 5 shows a schematic overview of the interaction of a first and a second mobile device with a profile server.

### DETAILED DESCRIPTION OF THE DRAWINGS

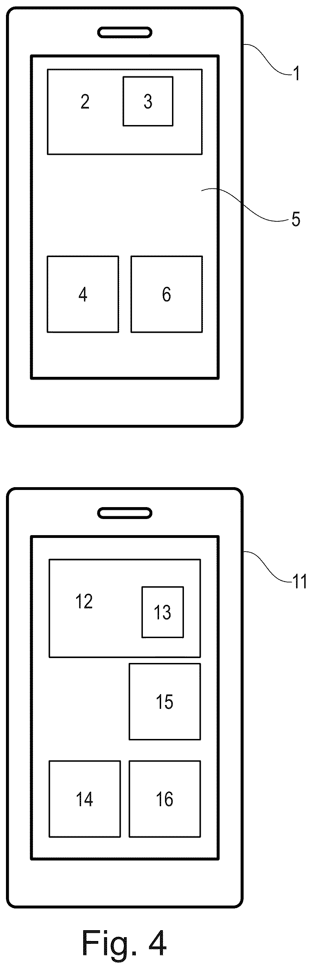

First, the devices will briefly be described on the basis of Figure 4. First mobile device 1 comprises a memory 2, wherein an embedded subscriber identity module, eSIM, subscriber profile 3 is stored. Mobile device 1 further comprises a near field communication, NFC, unit, 4 a display 5 and a processor 6. The first mobile device 1 is also called old phone in Figure 2.

The second mobile device 11 comprises at least a memory 12 for storing an embedded subscriber identity module, eSIM, subscriber profile 13, a near field communication, NFC, unit 14, a camera 15 and a processor 16. The second mobile device 11 is also called new phone in Figure 2.

In the present context, the term "memory", which is referred to by the reference signs 2 and 12, may refer to an eSIM or an eUICC, embedded universal integrated circuit card, which can be used to store the eSIM information, i.e. subscriber profiles. The eSIM or eUICC may even have processing capabilities and may therefore also embody a part of the processors 6 and 16.

In the present context, the term "processor" or "processors", which are referred to by the reference signs 6 and 16 for the first mobile device 1 and the second mobile device, respectively, may refer to a central processor of the respective mobile device. It may alternatively refer to a group of circuits distributed throughout the components of the mobile device. Thus, some parts of the processor of a mobile device may be located in the NFC unit, some may be located in the memory, e.g. the eUICC, and so on. Processors 6 and 16 may each even be a plurality of processing circuits working together.

Processors 6 and 16 are configured to implement the relevant features of method 100, which is now described in connection with Figures 2, 3 and 5. As can be seen in Figures 2, 3 and 5, method 100 starts with a first mobile device 1 and a second mobile device 11 being within near field communication, NFC, range to each other.

First, a transfer authentication of the first mobile device and the second mobile device is performed in step 110 using NFC technology. This is achieved by processor 6 in the first mobile device 1 using NFC unit 4 and by processor 16 in the second mobile device 11 using NFC unit 14.

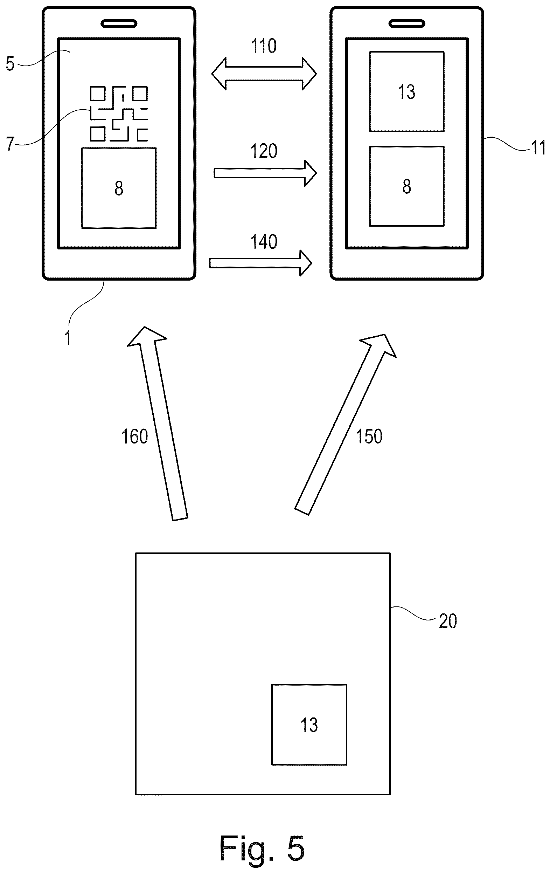

In response to a successful transfer authentication of step 110, the method proceeds to step 120, where profile identification information is transmitted from the first mobile device to the second mobile device, using optical technology. In the first mobile device 1, processor 6 displays profile identification information 7 on display 5. Profile identification information 7 is optical information, which may for example be a barcode, a QR code, text or number or a combination of both, one or more colors, or even an image. Processor 16 of the second mobile device 11 captures the profile identification information 7 displayed on display 5 of the first mobile device 1 using the camera 15. The information contained in profile identification information 7 may be evaluated by processor 16, for example, the bar- or QR code can be converted to clear text, or the text or number can be handled by optical character recognition, OCR. Figure 5 shows a symbolic QR code on display 5 of the first mobile device 1. Figure 5 shows an arrow for step 120, which indicates that the information of profile identification information 7 is transferred from the first mobile device 1 to the second mobile device 11.

Method 100 then proceeds to generating 130, by the first mobile device 1, an authentication key 8 based on the subscriber profile 3. The authentication key 8 may be generated by the eSIM, or eUICC, based on an instruction by the processor 6 to do so. The authentication key 8 is then transmitted from the first mobile device 1 to the second mobile device 11 in step 140. The authentication key 8 may be transmitted by and from the NFC unit 4 of the first mobile device 1 to the NFC unit 14 of the second mobile device 11. Processor 6 may accordingly instruct NFC unit 4 to transmit the authentication key. As an alternative, the authentication key 8 may also be transmitted from the first mobile device 1 to the second mobile device 11 using other technology, like Bluetooth or wireless local area network. Processor 6 is configured to send authentication key 8 to the second mobile device 11, and processor 16 is configured to receive authentication key 8 from the first mobile device 1. As stated above, this comprises instructing a transmission element, like the NFC unit 4, to actually send the authentication key 8. Figure 5 shows authentication key 8 in the first mobile device 1 and the second mobile device 11. It can be seen in Figure 5 that the authentication key 8 is generated in the first mobile device 1 and transmitted to the second mobile device 11 in step 140. Then it is also present in the second mobile device 11, the authentication key 8 is then stored by the processor 16 or the NFC unit 14 into memory 12.

Method 100 then proceeds to downloading 150, by the second mobile device 11, the subscriber profile 13 from the profile server 20 using the authentication key 8 and the profile identification information 7. Processor 16 is configured to download the subscriber profile 13 from a profile server 20 using the authentication key 8 and the profile identification information 7. Figure 5 shows an arrow for step 150, which indicates that the subscriber profile 13 is downloaded from profile sever 20 to the second mobile device 11.

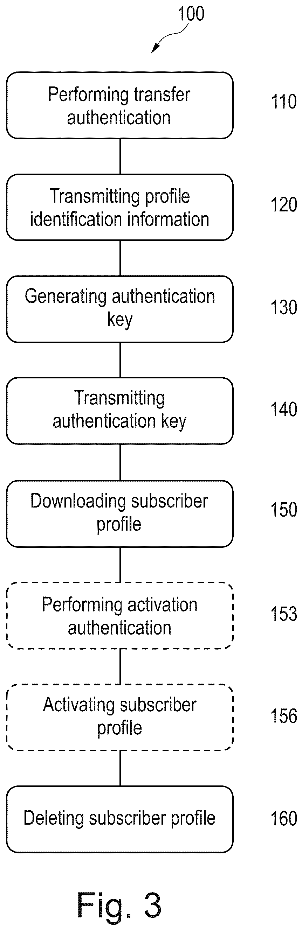

Method 100 may proceed to step 156, wherein the subscriber profile 13 is activated on the second mobile device 11. This may be performed in response to performing an activation authentication in step 153 of the first mobile device 1 and the second mobile device 11 using NFC technology, i.e. using NFC units 4 and 14. Since step 153 and step 156 are optional, they are indicated in a dashed fashion in Figure 3.

To achieve this, processor 6 of the first mobile device 1 may be configured to perform an activation authentication with the second mobile device 11 using NFC unit 4 and processor 16 of the second mobile device 11 may be configured to perform an activation authentication with the first mobile device 1 using NFC unit 14. Processor 16 of the second mobile device 11 may further be configured to activate the subscriber profile 13 in response to the successful activation authentication.

Method 100 then proceeds to deleting 160, by the profile server 20, the subscriber profile 3 on the first mobile device 1. Processor 6 is configured to delete the subscriber profile 3 in response to receiving a deletion instruction from the profile server 20. Figure 5 shows an arrow for step 160, which indicates that the first mobile device 1 is instructed to delete the subscriber profile 3 by profile server 20, or in other words, profile server 20 sends the instruction to delete the subscriber profile 3 to the first mobile device 1.

As stated above, the activation authentication may be encrypted, the transfer authentication may be encrypted, or both authentications may be encrypted. Processors 6 and 16 may then be configured to perform the corresponding authentication or authentications in an encrypted fashion.

It is noted that the features of the method as described herein can be implemented in the devices as described herein, and vice versa. Also, the combination of features is possible for the accordingly other categories of aspects.

In summary, changing mobile phone devices is allowed by transferring subscriber profile on an eSIM from an old phone to a new phone. This enables changing of phone, like moving a plastic sim card from the old phone to the new phone. Telecom frauds can use this process to steal subscriber profiles remotely, since a profile can be applied easily from one place and be used on another place, wherein the two places may be far remote, like several thousands of kilometers distant from each other.

With the disclosed techniques, an authentication by NFC is facilitated before transferring a subscriber profile, and - optionally - another authentication by NFC is facilitated to activate the transferred subscriber profile for using it after the transfer. Thereby it can be ensured that the two phones are in the same place for the profile transfer. As a further improvement, convergency NFC+eSIM chipsets may be used, where the NFC technology can directly access the eSIM on the convergency chipset, whereby online software attacks can be prevented and avoided.

With the disclosed techniques, problems and disadvantages of the prior art can be overcome. In particular, frauds can be prevented to cheat or attack customers online and steal profiles from distant locations to avoid police checking. Further, since NFC authentication only works in a distance of up to 10 cm, long-distance attack can be avoided or prevented.

Also, since NFC to eSIM authentication may be encrypted, the presented techniques are safer than alternative software solutions. It is also easier to implement the presented features on current hardware and software architecture.

The presented techniques use NFC to authenticate the start of the profile transfer between devices and may also use NFC to further authenticate profile activation, whereby frauds can be prevented to use a stolen profile.

### Reference signs

- 1: First mobile device
- 2: Memory
- 3: Embedded subscriber identity module, eSIM, subscriber profile
- 4: Near field communication, NFC, unit
- 5: Display
- 6: Processor
- 7: Profile identification information
- 8: Authentication key
- 11: Second mobile device
- 12: Memory
- 13: Embedded subscriber identity module, eSIM, subscriber profile
- 14: Near field communication, NFC, unit
- 15: Camera
- 16: Processor
- 20: Profile server
- 100: Method for transferring eSIM subscriber profile
- 110: Performing transfer authentication
- 120: Transmitting profile identification information
- 130: Generating authentication key
- 140: Transmitting authentication key
- 150: Downloading subscriber profile to second mobile device
- 153: Performing activation authentication
- 156: Activating subscriber profile on second mobile device
- 160: Deleting the subscriber profile on first mobile device

## Claims

1. A method (100) for transferring an embedded subscriber identity module, eSIM, subscriber profile from a first mobile device to a second mobile device, which are within near field communication, NFC, range to each other using a profile server, the method (100) comprising:
performing (110) a transfer authentication of the first mobile device and the second mobile device using NFC technology;
in response to the successful transfer authentication:
transmitting (120) profile identification information, from the first mobile device to the second mobile device, using optical technology;
generating (130), by the first mobile device, an authentication key based on the subscriber profile;
transmitting (140) the authentication key from the first mobile device to the second mobile device;
downloading (150), by the second mobile device, the subscriber profile from the profile server using the authentication key and the profile identification information; and
deleting (160), by the profile server, the subscriber profile on the first mobile device.

2. The method (100) of claim 1, further comprising
activating (156) the subscriber profile on the second mobile device.

3. The method (100) of claim 1, further comprising
performing (153) an activation authentication of the first mobile device and the second mobile device using NFC technology; and
activating (156) the subscriber profile on the second mobile device in response to the successful activation authentication.

4. The method (100) of claim 3, wherein the activation authentication is encrypted.

5. The method (100) of any one of claims 1 to 4, wherein the transfer authentication is encrypted.

6. A first mobile device (1), comprising at least a memory (2) storing an embedded subscriber identity module, eSIM, subscriber profile (3), a near field communication, NFC, unit (4), a display (5) and a processor (6), wherein the processor (6) is configured to
perform a transfer authentication with a second mobile device (11) using the NFC unit (4);
in response to the successful transfer authentication:
display profile identification information (7) on the display (5);
generate an authentication key (8) based on the subscriber profile (3);
transmit the authentication key (8) to the second mobile device (11); and
delete the subscriber profile (3) in response to receiving a deletion instruction from a profile server (20).

7. The first mobile device (1) of claim 6, wherein the processor (6) is further configured to perform an activation authentication with the second mobile device (11) using the NFC unit (4).

8. The first mobile device (1) of claim 7, wherein the processor (6) is configured to perform the activation authentication using encryption.

9. The first mobile device (1) of any one of claims 6 to 8, wherein the processor (6) is configured to perform the transfer authentication using encryption.

10. A second mobile device (11), comprising at least a memory (12) for storing an embedded subscriber identity module, eSIM, subscriber profile (13), a near field communication, NFC, unit (14), a camera (15) and a processor (16), wherein the processor (16) is configured to
perform a transfer authentication with the first mobile device (1) using the NFC unit (14);
in response to the successful transfer authentication:
capture profile identification information (7) using the camera (15) from a display (5) of the first mobile device (1);
receive an authentication key (8) from the first mobile device (1); and
download the subscriber profile (13) from a profile server (20) using the authentication key (8) and the profile identification information (7).

11. The second mobile device (11) of claim 10, wherein the processor (16) is further configured to activate the subscriber profile (13).

12. The second mobile device (11) of claim 10, wherein the processor (16) is further configured to
perform an activation authentication with the first mobile device using the NFC unit (14); and
activate the subscriber profile (13) in response to the successful activation authentication.

13. The second mobile device (11) of claim 12, wherein the processor (16) is configured to perform the activation authentication using encryption.

14. The second mobile device (11) of any one of claims 10 to 13, wherein the processor (16) is configured to perform the transfer authentication using encryption.

15. A computer program product comprising instructions which, when the program is executed by a processor, cause the processor to carry out the method (100) of any one of claims 1 to 5.
